# EUROPÄISCHE PATENTSCHRIFT

(11) **EP 2 874 839 B1**
(45) Veröffentlichungstag und Bekanntmachung des Hinweises auf die Patenterteilung: **14.09.2016**
(21) Anmeldenummer: 13741658.2
(22) Anmeldetag: 15.05.2013
(51) Int. Cl.: B60K 1/02, B60H 1/00, B60H 1/32, F02B 63/04, B60K 1/00

(54) **ANTRIEBSSYSTEM FÜR KRAFTFAHRZEUGE**
DRIVE SYSTEM FOR A MOTOR VEHICLE
SYSTÈME DE PROPULSION POUR VÉHICULE AUTOMOBILE

(30) Priorität: 16.05.2012 DE 102012010171
(43) Veröffentlichungstag der Anmeldung: 27.05.2015
(73) Patentinhaber: Technische Universität Chemnitz, 09111 Chemnitz (DE)
(72) Erfinder: DANZER, Christoph, 08371 Glauchau (DE); VON UNWERTH, Thomas, 38518 Gifhorn (DE)
(74) Vertreter: Krause, Wolfgang
(86) Internationale Anmeldenummer: PCT/DE2013/000276
(87) Internationale Veröffentlichungsnummer: WO 2013/170848

(56) Entgegenhaltungen:
- DE-A1-102010 031 156
- JP-A- 2003 077 514
- JP-A- 2010 178 403
- US-A1- 2002 153 180

## Beschreibung

Die Erfindung betrifft Antriebssysteme für Kraftfahrzeuge mit einem ersten Elektromotor und einem zweiten Elektromotor.

Bekannte Elektro- und Brennstoffzellenfahrzeuge verfügen zur Wandlung der elektrischen Batterieleistung in eine mechanische Fahrleistung über mindestens einen Elektromotor als Fahrantrieb. Die Antriebstopologien reichen dabei von Radnabenantrieben über radnahe Antriebsvarianten bis hin zum Zentralantrieb mit Differential, welcher aus konventionellen Fahrzeugen bekannt ist. Diese Antriebe bestehen fast immer aus einem Elektromotor und einem Getriebe mit einer festen Übersetzung. Im Bereich der Elektromotoren haben sich permanentmagnetisierte Synchronmotoren mit vergrabenen Magneten (IPSM) durchgesetzt, da diese hohe Wirkungsgrade über weite Drehzahlbereiche, hohe Leistungsdichten und eine günstige Feldschwächecharakteristik aufweisen.

Parallel dazu erschließt sich auch für die Asynchronmaschine ein gewisser Anwendungsbereich, wobei sich dieser eher auf den Betrieb bei höheren Drehzahlen bezieht. Im Vergleich zu IPSM weist die Asynchronmaschine funktionsbedingt geringere Wirkungsgrade auf, hat eine geringere Leistungsdichte, benötigt aber im Rotor kein teures und schwer verfügbares Magnetmaterial. Die damit einhergehend geringeren Herstellungskosten und die Robustheit zeichnen diesen Maschinentyp besonders aus, was im Serieneinsatz dieser Antriebe vorteilhaft sein kann.

Die in nahezu allen elektrischen Antrieben verwendeten Ein-Gang-Getriebe (singlespeed-transmissions - SST) haben verschiedene Bauformen und dienen der Bereitstellung der je nach Fahrzeuganwendung erforderlichen Zugkräfte. Hauptaugenmerk gilt bei bekannten Lösungen dem Zentralantrieb.

Eine zentrale Antriebstopologie mit achsversetztem Abtrieb weist neben betriebswirtschaftlichen Vorzügen in Form nur jeweils eines Elektromotors, Umrichters und Getriebes pro Fahrzeug auch wesentliche technische Vorteile auf. So ist diese Topologie durch eine geringe Masse, hohe konstruktive Gestaltungs- und Auslegungsfreiheit für Getriebe und Elektromotor, hohe Modularität und einen hohen Wirkungsgrad gekennzeichnet.

Für sehr kleine Fahrzeuge mit geringem Bauraumangebot eignet sich zudem die Integration von Elektromotor und Getriebe in eine koaxiale Baugruppe.

Bekannte Elektrofahrzeuge sind mit Ein-Gang-Getrieben ausgestattet. Diese eine feste Übersetzung zwischen Rad und Elektromotor erzwingt einen technischen Kompromiss, da einerseits die Übersetzung in manchen Fahrsituationen groß sein muss (Anfahren an Steigungen, Volllastbeschleunigungen, Rangierbetrieb) und andererseits kleine Übersetzungen bei höheren Geschwindigkeiten unter anderem zur Verbrauchsreduzierung benötigt werden. Aufgrund der noch relativ geringen Energiedichte der Traktionsbatterien ist die Höchstgeschwindigkeit bei verfügbaren Elektrofahrzeugen meist auf Werte zwischen 130 km/h und 160 km/h begrenzt, um die Reichweite durch verbrauchsintensive Autobahnfahrten nicht zu sehr herabzusetzen.

Eine feste Getriebeübersetzung hat weiterhin den Nachteil, dass sich die Betriebspunkte von Elektromotor (Drehzahl, Drehmoment), Leistungselektronik (Strom, Spannung) und Batterie (Strom, Spannung) ebenso fest nach der aktuellen Fahrsituation (Geschwindigkeit, Beschleunigung, Steigung) einstellen. Damit sind auch die in diesen Betriebspunkten entstehenden Verlustleistungen festgelegt.

Bekannte Elektrofahrzeuge sind antriebsseitig weitestgehendem mit Leistungskapazitäten ausgestattet, welche nur gering von denen abweichen, wie sie in verbrennungsmotorisch betriebenen Fahrzeugen vorliegen. Ein wichtiger Grund dafür ist, dass die tatsächliche Fahrzeugleermasse batteriebedingt auch bei kleineren Fahrzeugen relativ hoch ist. Die hohe Drehmomentkapazität der Elektromotoren ermöglicht dennoch auch bei moderaten Antriebsleistungen ein sportliches Anfahrverhalten.

Es hat sich gezeigt, dass im Durchschnitt weit über 60 % der für einen Fahrzyklus benötigten Antriebsleistungen kleiner als 10 kW sind. Die in Elektrofahrzeugen verbauten Elektromotoren sind meist mit einer Dauerleistung von ca. 40 kW bis 80 kW ausgestattet, wobei kurzzeitige Spitzenbelastungen bis zur doppelten Dauerleistung zulässig sind. Daraus ist ableitbar, dass ein Elektrofahrzeug, wie jedes konventionell angetriebene Fahrzeug auch, sehr häufig im mittleren bis unteren Teillastbereich betrieben wird.

Speziell im unteren Teillastbereich (0 bis 5 kW) treten bei Elektroantrieben mit hohen Dauerleistungen relativ große Grundverluste auf, welche sowohl im Elektromotor selbst, als auch in der Leistungselektronik entstehen Diese Grundverluste werden neben der Abhängigkeit vom Maschinentyp hauptsächlich durch die hochdimensionierten Magnetkreise und Blechpakete (Stator, Rotor) und der damit einhergehenden Ummagnetisierungsverluste verursacht. Weiterhin sind die Innenwiderstände bei Hochleistungsmaschinen aufgrund der maximal zulässigen Stromdichte und der Baugröße relativ hoch, was auch bei geringer Strombelastung (Teillastbereich) zu höheren Stromwärmeverlusten führt.

Darüber hinaus besitzen Elektrofahrzeuge elektrisch angetriebene Kältemittelverdichter, um die Klimatisierung des Fahrzeuges sicherzustellen. Ein üblicher Kältemittelverdichter verbraucht beispielsweise im Betrieb durchschnittlich zwischen 1 kW und 2 kW Antriebsleistung, welche meist über einen zusätzlichen Elektromotor zur Verfügung gestellt wird. Diese Antriebe erzeugen aufgrund der geringen Baugröße und zusätzlichen Steuerverlusten in den extra vorhandenen Leistungsbauelementen relativ hohe Verlustleistungen mit den daraus resultierenden Zusatzkosten.

Zudem ist von einer weiteren Steigerung der Antriebsleistung für die Klimatisierung abzusehen, da vor allem die Traktionsbatterie bei allen Umgebungsbedingungen auf einem bestimmten Temperaturniveau betrieben werden muss. Das Einbringen dieser zusätzlichen Heiz- oder Kühlenergie dient weiterhin auch der Steigerung von Altersbeständigkeit und Leistungsfähigkeit der teuren Batteriesysteme.

Elektrofahrzeuge werden entweder durch eine Hochvoltbatterie oder durch ein Brennstoffzellensystem mit Energie versorgt. Antriebsseitig sind bekannte Elektrofahrzeuge mit fest übersetzten Getrieben ausgestattet, welche meist als Zentralantrieb auf einer Achse ausgeführt sind.

Der Entwicklungstrend zeigt, dass sich automatisierte Getriebe in Fahrzeugen immer weiter durchsetzen. So wird auch bei Elektrofahrzeugen mit Mehr-Gang-Getrieben keine Zugkraftunterbrechung während des Schaltvorganges akzeptiert werden. Dieser wichtige Effekt bedingt, dass auch Mehr-Gang-Getriebe mit nur zwei oder drei Fahrgängen dieselben aufwendigen Zusatzkomponenten (Hochdruckhydraulik, Reibsynchronisierungen und Lamellenkupplungen) aus bekannten Doppelkupplungs- oder Automatgetrieben beinhalten müssen. Diese Komponenten tragen erheblich zum Mehrgewicht bei und erhöhen die Kosten für ein solches Getriebe. Gleichzeitig ist die Ausnutzung dieser Zusatzkomponenten mit den wenigen Schaltvorgängen im Vergleich zu Sieben-, Acht- oder Neun-Gang-Strukturen äußerst gering. Die hohen Grundverluste einer Getriebehydraulik und die Schleppverluste in den Reibsynchronisierungen senken das eingangs beschriebene Einsparpotential solcher Mehr-Gang-Getriebe erheblich ab.

Das Dokument JP 2003 077514 beschreibt ein Antriebssystem für Kraftfahrzeuge mit einem ersten Elektromotor und einem zweiten Elektromotor, wobei,
- der Rotor des ersten Elektromotors mit einem Abtrieb verbunden ist,
- der Rotor des zweiten Elektromotors mit wenigstens einem Aggregat und mit dem Zentralrad eines Planetengetriebes verbunden ist,
- der Abtrieb mit dem Außenrad des Planetengetriebes verbunden ist,
- sich zwischen dem Außenrad und dem Zentralrad des Planetengetriebes wenigstens ein Planetenrad befindet.

Der im Patentanspruch 1 angegebenen Erfindung liegt die Aufgabe zugrunde, ein effizientes Antriebssystem für Kraftfahrzeuge zu schaffen.

Diese Aufgabe wird mit den im Patentanspruch 1 aufgeführten Merkmalen gelöst.

Die Antriebssysteme für Kraftfahrzeuge mit einem ersten Elektromotor und einem zweiten Elektromotor zeichnen sich insbesondere durch ihre große Effizienz aus. Dazu ist der Rotor des ersten Elektromotors
- entweder direkt mit einem Abtrieb verbunden oder
- über wenigstens ein erstes Schaltelement lösbar mit einem Abtrieb verbindbar.

Zum Einen ist der Rotor des zweiten Elektromotors direkt oder über eine Schaltvorrichtung lösbar mit wenigstens einem Aggregat verbunden.

Zum Anderen ist der Rotor des zweiten Elektromotors
- entweder mit dem Zentralrad eines Planetengetriebes
- oder sowohl mit dem Zentralrad eines Planetengetriebes als auch über ein zweites

Schaltelement lösbar mit dem Rotor des ersten Elektromotors verbunden oder verbindbar.

Der Abtrieb ist mit dem Außenrad des Planetengetriebes verbunden. Zwischen dem Außenrad und dem Zentralrad des Planetengetriebes befindet sich wenigstens ein Planetenrad. Darüber hinaus ist der Steg des Planetengetriebes als Planetenträger über eine Schalteinrichtung mit einem feststehenden Teil lösbar verbindbar.

Das Antriebssystem zeichnet sich damit durch die Kombination eines separat angetriebenen Aggregates beispielsweise in Form einer Klimatisierungsanlage oder eines anderen Nebenaggregates mit ähnlichem Leistungsbedarf mittels eines Elektromotors mit dem Fahrantrieb höherer Leistung und deren Integration in ein Antriebssystem aus. Damit wird der ohnehin vorhandene Antrieb für das Aggregat ins Antriebssystem eingebunden und im Teillastbereich gezielt als Fahrzeugantrieb mit verwendet. Somit wird das Problem der Grundverluste des Hauptantriebs im Teillastbereich gelöst, da die dann auftretenden geringen Fahrleistungen mit dem kleineren der beiden Elektroantriebe für das Aggregat sehr effizient aufgebracht werden kann. Aufgrund dieser Doppelnutzung des Elektromotors mit kleiner Leistung wird dieser weiterhin besser ausgelastet, wodurch sich auch für das Aggregat höhere Antriebswirkungsgrade ergeben. Da dieser Antrieb nun auch in den Betriebssituationen genutzt wird, in welchen kein zwingender Antrieb des Aggregates notwendig ist. Gleichzeitig reduzieren sich durch die Integration beider Elektromotoren in ein Antriebssystem sowohl der bauraumtechnische Aufwand als auch das Systemgewicht.

Die Integration von zwei elektrischen Maschinen für den Antrieb des Fahrzeuges und des Aggregates in ein Getriebe ermöglicht die energieeffiziente Leistungsaufteilung auf beide Motoren, je nachdem wie viel Leistung sowohl für das Fahren als auch für die Nebensysteme benötigt wird. Damit kann insbesondere im häufig genutzten Teillastbereich Verlustleistung eingespart und damit die Reichweite von Elektrofahrzeugen, unabhängig mit welchem Speicher die Energie bereitgestellt wird (Batterie, Brennstoffzelle, SuperCap oder Schwungradspeicher), erhöht werden. Zur Umsetzung dieses Antriebskonzeptes ist eine bestimmte Auslegung und Verschaltung der Komponenten und eine Betriebsstrategie zur Aufteilung der Leistung notwendig.

Dabei kann der erste Elektromotor permanent mit dem Abtrieb und damit mit dem Fahrzeug verbunden sein. Der zweite Elektromotor kann weiterhin permanent mit dem Aggregat verbunden sein. Der zweite Elektromotor ist zudem über das herkömmliche Planetengetriebe mit dem Fahrzeugabtrieb verbunden. Weiterhin kann der Planetenträger ferner über die Schalteinrichtung in Wirkung einer Bremse direkt mit einem feststehenden Teil schaltbar verbunden werden. Dieser feststehende Teil kann insbesondere das Gehäuse für das Antriebssystem sein. Aufgrund dessen, dass nur ein Schaltelement vorhanden ist, existieren nur zwei Systemzustände.

Im ersten Zustand als Hauptzustand ist die Bremse geschlossen. Damit ist der zweite Elektromotor über das Planetengetriebe kinematisch fest mit dem feststehenden Teil verbunden. Die zum Antrieb des Fahrzeuges benötigte Leistung kann nun wahlweise auf beide Elektromotoren über das Drehmoment verteilt werden, je nachdem welche Aufteilung insgesamt die geringsten Systemverluste ergibt. Dafür steht die gesamte Leistungskapazität beider Elektromotoren zur Verfügung. Die Leistungsaufteilung ändert sich weiterhin, wenn das Aggregat parallel zum Fahrzeug eine Leistung abfordert. Um die je nach Systemdrehzahlen und Fahranforderungen effizienteste Verteilung der Batterieleistung zu gewährleisten, ist eine entsprechende Betriebsstrategie notwendig. Im Teillastbetrieb kann so beispielsweise die gesamte Antriebsleistung auf den zweiten Elektromotor verteilt werden, welche dann sehr gut ausgelastet ist und hohe Gesamtwirkungsgrade entstehen. Dafür ist es vorteilhaft, wenn der erste Elektromotor keine drehzahlbedingten Schleppverluste aufweist, da diese immer mit dem Abtrieb verbunden ist.

Der zweite Zustand ergibt sich bei Öffnung der Bremse. Damit wird der zweite Elektromotor vom Fahrzeugabtrieb abgekoppelt und kann einen beliebigen Drehzahlzustand einnehmen. Dies kann beispielsweise dann notwendig werden, wenn eine bestimmte Geschwindigkeit des Fahrzeuges erreicht ist und die Drehzahlen am Aggregat und dem zweiten Elektromotor aufgrund der hohen Übersetzung zum Rad einen Maximalwert erreichen. Außerdem existieren bei Aggregaten beispielsweise in Form von Kältemittelverdichtern bestimmte, funktionsbedingte Mindestdrehzahlen. Fährt das Fahrzeug sehr langsam (Stau oder Rangierbetrieb), kann über diesen Zustand mit dem zweiten Elektromotor weiterhin der Kältemittelverdichter als Bestandteil der Klimaanlage bei beliebiger Drehzahl angetrieben werden.

Das zeigt die einfache Kombination und Integration zweier ohnehin vorhandener Antriebe in einen Systemantrieb, welcher wahlweise je nach Leistungsanforderungen den jeweils günstigsten Betriebspunkt auswählt und damit über alle Fahrsituationen hinweg effizient betrieben werden kann. Gleichzeitig treten keine Einschränkungen in der Unabhängigkeit der Einzelsysteme (Fahren und beispielsweise Klimatisieren) auf. Der mechanische Aufwand ist ebenso gering und die verwendeten Maschinenelemente sind im Fahrzeugantriebsstrang hinreichend bekannt.

Vorteilhafterweise ist das Antriebssystem mit dem ersten und dem zweiten Schaltelement ein zur weiteren Verbrauchsreduzierung gewünschtes Mehr-Gang-Getriebe, ohne dass dabei eine Zugkraftunterbrechung während des Schaltvorganges oder erhebliche Mehrverluste durch mechanische Zusatzkomponenten hingenommen werden müssen. Das wird dadurch erreicht, dass die beiden Elektromotoren nicht nur zur verbrauchsoptimalen Leistungsaufteilung genutzt, sondern gleichzeitig als Synchronisationselemente und zur gegenseitigen Zugkraftüberbrückung eingesetzt werden. Dabei kann ein Elektromotor das Fahrzeug antreiben, während sich der andere auf eine neue Schaltdrehzahl aktiv synchronisiert.

Der Fahrzustandswechsel erfolgt ähnlich des Doppelkupplungsprinzips durch die Momentenübergabe auf den Abtrieb bei gleichzeitiger Drehzahlsynchronisierung. Diese Vorgänge werden im Gegensatz zur herkömmlichen Doppelkupplung nicht durch den Einsatz von Reibleistung (Verlustleistung) ausgeführt, sondern mittels der ohnehin aktiv ausregelbaren Elektromotoren realisiert.

Mit dieser Art der reibungsfreien Drehmomentübergabe durch die Elektromotoren entfällt zum einen die aufwendige Doppelkupplung, deren Hydraulikeinheit, eine Hochdruckpumpe sowie Filter-, Stabilisierungs-, Speicher- und Sensorelemente. Zum anderen können hydraulisch angesteuerte Schaltbetätigungen durch kompaktere und effizientere elektromotorisch angetriebene Einheiten ersetzt werden. Dieser Ersatz ist nur deshalb möglich, da durch die reibungsfreie Drehmomentübergabe und die aktive Synchronisierung keine Reibarbeit durch die Schaltelemente aufgebracht werden muss. Neben einer hocheffizienten Schaltaktorik resultiert daraus die Elimination von reibbasierten Bauteilen wie den Synchronringen, was wiederum den axialen Bauraumbedarf verringert und gleichzeitig den Getriebewirkungsgrad erhöht.

Das Antriebssystem ermöglicht aufgrund des Vorhandenseins von zwei Elektromotoren und deren Kopplung mit dem Kraftfahrzeug und/oder den Nebenaggregaten ein Leistungsmanagement zwischen den Energiespeichersystemen, beispielsweise der Batterie, und den Energieverbraucher (Fahrzeug, Nebenaggregate). Weiterhin kann durch beide Elektromotoren ein lastschaltbares Mehr-Gang-Getriebe realisiert werden, indem jeweils ein Antrieb das Kraftfahrzeug und/oder die Nebenaggregate antreibt und der andere Antrieb sich selbst auf die Drehzahl eines neuen Fahrganges synchronisiert. Durch die Ansteuerung der Elektromotoren und Schaltelemente ist demnach in vielen Fahrsituationen eine zugkraftunterbrechungsfreie Schaltung möglich.

Dabei werden von der Betriebsstrategie beispielsweise folgende Aspekte berücksichtigt:
- Lastpunktverschiebung durch die Drehmomentvariation in der Ansteuerung beider Elektromotoren, so dass im System bestehend aus Batterie, Leistungselektroniken, Elektromotoren, Getriebe und Nebenaggregat/Aggregaten die geringsten Verlustleistungen entstehen,
- Lastpunktverschiebung durch Schalten von verschiedenen Fahrgängen durch die Schaltelemente, so dass gezielt Betriebspunkte hinsichtlich von Drehzahlen und Drehmomenten an den Elektromotoren, Nebenaggregat/en und im Getriebe verändert werden, um die geringsten Gesamtverluste zu erreichen,
- Einhaltung von Betriebsgrenzen, die etwa durch Maximaldrehzahlen an den Elektromotoren und am/an Nebenaggregat/Nebenaggregaten vorhanden sind oder bestimmte Systemzustände die Leistungs- und/oder Drehmomentgrenzen der Elektromotoren übersteigen,
- Lastpunktverschiebung an den Elektromotoren wenn ein Schaltvorgang von einem Fahrgang in den nächsten erfolgen soll, damit ein Getriebepfad lastfrei geregelt wird und die Schaltelemente geöffnet oder geschlossen werden können,
- aktive Drehzahlsynchronisierung durch Drehzahlregelung mindestens eines nicht an den Abtrieb angekoppelten Elektromotors an die Drehzahl der Getriebewelle, welche einen neuen Fahrgang realisiert,
- Betätigung der Schaltelemente je nach Ablaufplan eines Schaltvorganges oder zur lastfreien Schaltung in sicherheitskritischen Fahrsituationen.

Die Elektromotoren sind günstigerweise derart auszulegen,
- dass die Charakteristik der Wirkungsgradkennfelder beider Elektromotoren in möglichst vielen und häufig vorkommenden Betriebspunkten hohe Wirkungsgrade aufweisen,
- dass die Charakteristik der Wirkungsgradkennfelder und die Eckwerte (max. Drehmoment, max. Leistung, max. Drehzahlen) beider Elektromotoren so aufeinander abgestimmt sind, dass in möglichst vielen Betriebspunkten möglichst geringe Gesamtverlustleistungen entstehen und
- dass diese anhand der Leistungskapazität den alleinigen Antrieb von Fahrzeug und Nebenaggregat/en in möglichst vielen Fahrsituationen bewerkstelligen können, um damit zugkraftunterbrechungsfreie Schaltungen zu gewährleisten.

Vorteilhafte Ausgestaltungen der Erfindung sind in den Patentansprüchen 2 bis 15 angegeben.

Der erste Elektromotor ist nach der Weiterbildung des Patentanspruchs 2 über ein drittes Schaltelement günstigerweise lösbar mit dem wenigstens einem Aggregat verbindbar.

Der Rotor des ersten Elektromotors ist nach der Weiterbildung des Patentanspruchs 3 über ein weiteres Schaltelement lösbar mit dem Steg verbindbar. Damit kann durch beide Elektromotoren ein leistungsverzweigter Betrieb derart realisiert werden, dass über den kinematischen und kinetischen Freiheitsgrad die Betriebspunkte der Elektromotoren optimiert werden können.

Der Steg des Planetengetriebes ist nach der Weiterbildung des Patentanspruchs 4 über ein weiteres Schaltelement lösbar mit dem Abtrieb verbindbar. Damit ergibt sich ein weiterer Schaltzustand, bei welchem der zweite Elektromotor die Drehzahl des Abtriebs erfährt. Damit kann beispielsweise auch bei höheren Geschwindigkeiten über den zweiten Elektromotor rekuperiert werden.

Der Steg ist nach der Weiterbildung des Patentanspruchs 5 über wenigstens eine Schalteinheit mit einem weiteren Motor lösbar verbindbar. Dieser kann dazu ein bekannter Verbrennungsmotor sein. In dieser Anordnung kann zusätzlich zu der Leistung aus der Batterie über die beiden Elektromotoren eine weitere Leistungsquelle zur Erhöhung der Systemleistung beitragen. Mittels des Planetengetriebes ist damit eine vollständige Leistungsverzweigung des Motors über die beiden Elektromotoren möglich, was zusätzlich zu den mechanischen Fahrgängen eine stufenlose Übersetzung des Motors zum Abtrieb ermöglicht. Diese Anordnung ist damit besonders für Hybridanwendungen interessant, ohne dass dabei die Eigenschaften des vorher beschriebenen Elektroantriebs beeinträchtigt werden.

Der Steg ist nach der Weiterbildung des Patentanspruchs 6 über einen Schaltmechanismus mit dem Zentralrad lösbar verbindbar. Weiterhin kann das Zentralrad nach der Weiterbildung des Patentanspruchs 7 über ein Schaltsystem mit dem Außenrad lösbar verbindbar sein. Diese Betriebsmodi realisieren eine mechanische Blockierung des Planetengetriebes, welches dann als Block umläuft, da alle Wellen (Außenrad, Zentralrad und Steg) dieselbe Drehzahl aufweisen. In diesen Zuständen kann der zweite Elektromotor über das Zentralrad, den Steg oder das Außenrad ohne eine Übersetzung direkt an den Abtrieb gekoppelt werden, wobei aufgrund des blockierten Zahnkontaktes keine Verzahnungsverluste entstehen, was insbesondere bei höheren

Antriebsleistungen zur deutlichen Verbrauchseinsparung führt.

Nach der Weiterbildung des Patentanspruchs 8 ist das Planetengetriebe ein Zahnradgetriebe, wobei das Außenrad eine Innenverzahnung aufweist und das Zentralrad sowie das Planetenrad Stirn- oder Kegelräder sind.

Der erste Elektromotor ist nach der Weiterbildung des Patentanspruchs 9 ein Ringmotor, wobei der Außenring der Stator und der Innenring der Rotor. Weiterhin befindet sich im Hohlraum des Ringmotors der zweite Elektromotor. Damit reduziert sich sowohl der bauraumtechnische Aufwand als auch das Gewicht dieses Antriebssystemes.

Der Abtrieb ist nach der Weiterbildung des Patentanspruchs 10 über ein Zahnrad- und ein Differentialgetriebe mit den Antriebswellen des Kraftfahrzeugs verbunden. Damit ergibt sich die Möglichkeit einer vergleichsweise einfachen Anpassung der Gesamtübersetzungen durch den Austausch einer Stirnradstufe.

Das Aggregat ist nach der Weiterbildung des Patentanspruchs 11 ein Kältemittelverdichter einer Klimaanlage für das Kraftfahrzeug und/oder ein Kathodenluftverdichter für einen Brennstoffzellenwandler.

Der erste Elektromotor und der zweite Elektromotor weisen nach der Weiterbildung des Patentanspruchs 12 jeweils einen Drehzahlmesser auf. Die Drehzahlmesser sind weiterhin so mit einer Steuereinrichtung für den ersten Elektromotor und den zweiten Elektromotor verbunden, dass eine aktive Drehzahlsynchronisierung wenigstens durch eine Drehzahlregelung mindestens eines nicht an den Abtrieb angekoppelten Elektromotors an die Drehzahl einer Getriebewelle erfolgt. Damit erfolgt die Betätigung der Schaltelemente je nach einem Ablaufplan eines Schaltvorganges oder zur lastfreien Schaltung in sicherheitskritischen Fahrsituationen.

Der erste Elektromotor und der zweite Elektromotor weisen nach der Weiterbildung des Patentanspruchs 13 jeweils einen Drehmomentaufnehmer auf. Weiterhin sind die Drehmomentaufnehmer so mit einer Steuereinrichtung für den ersten Elektromotor und den zweiten Elektromotor verbunden, dass über eine Lastpunktverschiebung durch eine Drehmomentvariation in der Ansteuerung der Elektromotoren die Gesamtverlustleistungen im mechanischen und elektrischen Antriebsstrang optimiert werden.

Der erste Elektromotor und der zweite Elektromotor weisen nach der Weiterbildung des Patentanspruchs 14 jeweils einen Drehzahlmesser und einen Drehmomentaufnehmer auf. Darüber hinaus sind die Drehzahlmesser und die Drehmomentaufnehmer so mit einer Steuereinrichtung für den ersten Elektromotor und den zweiten Elektromotor verbunden, dass eine Lastpunktverschiebung an den Elektromotoren bei einem Schaltvorgang erfolgt, damit ein Getriebepfad lastfrei geregelt wird und die Schaltelemente öffen- oder schließbar sind.

Vorteilhafterweise ist das Planetengetriebe nach der Weiterbildung des Patentanspruchs 15 ein Zahnradgetriebe, wobei entweder das Außenrad eine Innenverzahnung aufweist und das Zentralrad sowie das Planetenrad Stirn- oder Kegelräder sind oder das Außenrad eine Außenverzahnung aufweist und das Zentralrad schaltbar an den ersten Elektromotor und/oder an den zweiten Elektromotor verbindbar ist.

Ein Ausführungsbeispiel der Erfindung ist in den Zeichnungen jeweils prinzipiell dargestellt und wird im Folgenden näher beschrieben.

Es zeigen:
Fig. 1 ein Antriebssystem für ein Kraftfahrzeug,
Fig. 2 ein Antriebssystem als Ein-Gang-Antrieb und
Fig. 3 ein Antriebssystem als Zwei-Gang-Antrieb.

Ein Antriebssystem für Kraftfahrzeuge besteht im Wesentlichen aus einem ersten Elektromotor 1 als Fahrantrieb für ein Fahrzeug, einem zweiten Elektromotor 2 als Antrieb für einen Kältemittelverdichter 3 als Aggregat 3 des Kraftfahrzeugs, einem Planetengetriebe 4, einem Inverter 5 und einer Traktionsbatterie 6 als Energiequelle für die Elektromotore 1, 2. Das Planetengetriebe 4 ist ein Bestandteil des Getriebes 7, welches über die Antriebswellen 8 auf die Räder 9 des Kraftfahrzeugs wirkt.

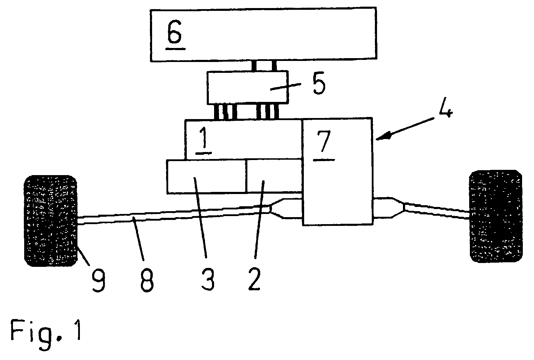

Die Fig. 1 zeigt ein Antriebssystem für ein Kraftfahrzeug in einer prinzipiellen Darstellung.

Der zweite Elektromotor 2 ist in den ersten Elektromotor 1 integriert. Dazu ist der erste Elektromotor 1 ein Ringmotor 1, wobei der Außenring 10 der Stator 10 und der Innenring 11 der Rotor 11 ist. Im Hohlraum des Ringmotors 1 ist der zweite Elektromotor 2 angeordnet. Der Rotor 11 des ersten Elektromotors 1 ist entweder direkt oder über wenigstens ein Schaltelement mit dem Außenrad 13 des Planetengetriebes 4 verbunden, welches dazu vorteilhafterweise als eine Umhausung 14 mit einem innenverzahnten Zahnrad 13 ausgeführt sein kann. Die Umhausung 14 ist dazu topfförmig ausgeführt. Der zweite Elektromotor 2 im ersten ringförmigen Elektromotor 1 ist über seinen Rotor 12 sowohl mit dem Aggregat 3 als auch dem Zentralrad 15 des Planetengetriebes 4 verbunden. Der Boden der Umhausung 14 ist gleichzeitig der Abtrieb 16, der weiterhin über ein Verbindungsgetriebe 17 und ein Differentialgetriebe 18 mit den Antriebswellen 8 des Kraftfahrzeugs verbunden ist.

Die Elektromotoren 1, 2, das Planetengetriebe 4, das Aggregat 3, das Verbindungsgetriebe 17 und das Differentialgetriebe 18 befinden sich in einem Gehäuse 21.

Dazu besteht in einer ersten Ausführungsform das Antriebssystem für Kraftfahrzeuge weiterhin im Wesentlichen aus dem ersten Elektromotor 1 als Fahrantrieb für das 25 Kraftfahrzeug, dem zweiten Elektromotor 2 als Antrieb für das wenigstens eine Aggregat 3 des Kraftfahrzeugs, dem Planetengetriebe 4 und einer Bremse B0 als Schalteinrichtung.

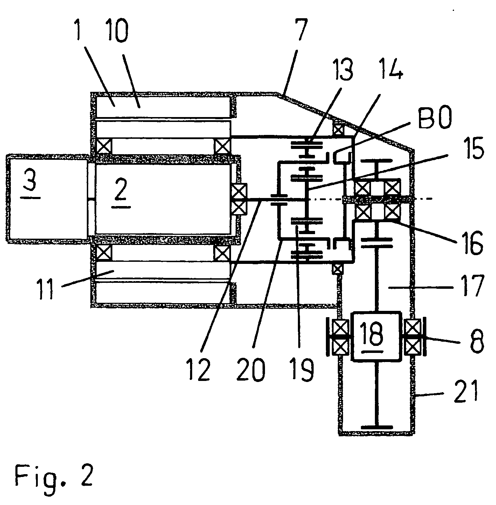

Die Fig. 2 zeigt ein Antriebssystem als Ein-Gang-Antrieb in einer prinzipiellen Darstellung.

Dabei sind der erste Elektromotor 1 direkt mit dem Abtrieb 16 und der zweite

Elektromotor 2 mit dem Kältemittelverdichter 3 als Aggregat 3 verbunden. Weiterhin sind der zweite Elektromotor 2 gleichzeitig an das Zentralrad 15 des Planetengetriebes 4 und der Abtrieb 16 gleichzeitig an das Außenrad 10 des Planetengetriebes 4 gekoppelt. Zwischen dem Außenrad 10 und dem Zentralrad 15 des Planetengetriebes 4 befindet sich wenigstens ein Planetenrad 19. Der Steg 20 des Planetengetriebes 4 als Planetenträger ist über die Bremse B0 als Schalteinrichtung mit dem Gehäuse 21 als feststehenden Teil verbindbar.

Das Außenrad 13 ist gleichzeitig eine Umhausung 14 für das Planetengetriebe 4 und die Bremse B0. Das Planetengetriebe 4 ist ein Zahnradgetriebe, wobei das Außenrad 10 eine Innenverzahnung aufweist und das Zentralrad 15 sowie das Planetenrad 19 Stirnräder sind. Der Abtrieb 16 ist über das Verbindungsgetriebe 17 und das Differentialgetriebe 18 mit den Antriebswellen 8 für Räder 9 des Kraftfahrzeugs verbunden.
Das Planetengetriebe 4, der Abtrieb 16, das Verbindungsgetriebe 17 und das Differentialgetriebe 18 sind das in der Fig. 1 gezeigte Getriebe 7.

Dazu besteht in einer zweiten Ausführungsform ein Antriebssystem für Kraftfahrzeuge darüber hinaus im Wesentlichen aus dem ersten Elektromotor 1 als hauptsächlicher Fahrantrieb für das Kraftfahrzeug, dem zweiten Elektromotor 2 als hauptsächlicher Antrieb für das wenigstens eine Aggregat 3 des Kraftfahrzeugs, Schaltelementen K0, K1, dem Planetengetriebe 4 und der Bremse B0 als Schalteinrichtung.

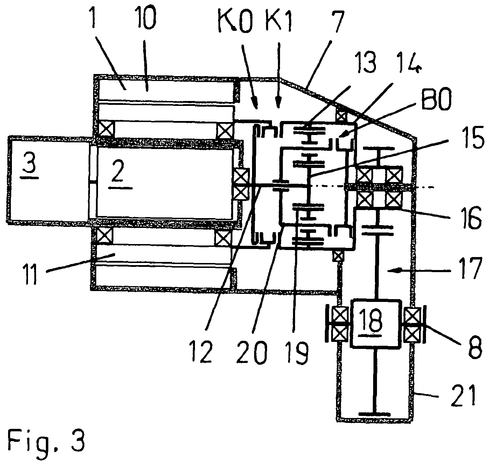

Die Fig. 3 zeigt ein Antriebssystem als Zwei-Gang-Antrieb in einer prinzipiellen Darstellung.

Dabei ist dieses Antriebssystem gegenüber dem der ersten Ausführungsform dahingehend erweitert, dass zur weiteren Verbrauchsreduzierung dieses Getriebe als ein Mehr-Gang-Getriebe durch die Schaltelemente K0, K1 ausgebildet ist, ohne dass dabei eine Zugkraftunterbrechung während des Schaltvorganges oder erhebliche Mehrverluste durch mechanische Zusatzkomponenten hingenommen werden müssen.

Dabei werden die beiden Elektromotore 1, 2 nicht nur zur verbrauchsoptimalen

Leistungsaufteilung genutzt, sondern gleichzeitig als Synchronisationselemente und zur gegenseitigen Zugkraftüberbrückung eingesetzt. Dabei kann ein Elektromotor 1, 2 das Kraftfahrzeug antreiben, während sich der andere auf eine neue Schaltdrehzahl aktiv synchronisiert.

Durch die Schaltelemente K0, K1, die vorzugsweise als verlustarme Zahnkupplung ausgeführt sind, können insgesamt sechs sinnvolle Schaltzustände realisiert werden, welche in der nachfolgenden Schaltlogik dargestellt sind.

| Zustand | K0 | K1 | B0 |
|---|---|---|---|
| EINS | X | | X |
| ZWEI | | X | X |
| DREI | | X | |
| VIER | | | X |
| FÜNF | X | | |
| SECHS | | | |

Zustand FÜNF und SECHS beschreiben jeweils die Neutralstellung des Antriebs, so dass eine freie Bewegung des Kraftfahrzeuges möglich ist.

Zustand DREI und VIER beschreiben Fahrmodi, in welchen jeweils einer der Elektromotoren (erster Elektromotor 1 im Zustand VIER, zweiter Elektromotor 2 im Zustand DREI) vom Antriebsstrang abgekoppelt ist. Dabei wird das Kraftfahrzeug immer vom jeweils anderen Elektromotor 1, 2 angetrieben. Diese Zustände werden im realen Betrieb genutzt, um während eines Fahrstufenwechsels die Zugkraft am Rad 9 aufrechtzuerhalten und gleichzeitig die aktive Synchronisation auf eine Schaltdrehzahl vornehmen zu können. Weiterhin kann in Zustand DREI der zweite Elektromotor 2 die Klimaanlage mittels des Kältemittelverdichters 3 als Aggregat 3 unabhängig vom Fahrzustand antreiben.

Zustand EINS und ZWEI stellen die eigentlichen Fahrgänge dar, wobei im Zustand EINS (Fahrgang EINS) beide Elektromotoren 1, 2 an die Zentralradwelle und damit an das Zentralrad 15 des Planetengetriebes 4 angekoppelt werden und damit die maximale Getriebeübersetzung zur Drehmomenterzeugung nutzbar ist. Mit diesem Fahrgang können die maximalen Raddrehmomente für starke Beschleunigungen und große Steigungen dauerhaft aufgebracht werden. Zudem ist dieser Gang auch für normale Anfahrvorgänge geeignet, da durch die bessere Kennfeldausnutzung des elektrischen Stranges ein höherer Systemwirkungsgrad erreicht werden kann.

Zustand ZWEI wird als Hauptfahrbereich bezeichnet und ermöglicht die jeweils verbrauchsoptimale Leistungsaufteilung zwischen beiden Elektromotoren 1, 2.

Weiterhin bleibt die volle Flexibilität beider Elektromotore 1, 2 zum Betrieb des Kraftfahrzeugs und der Klimaanlage erhalten.

Der Fahrzustandswechsel (Zustand EINS/ZWEI) erfolgt ähnlich des Doppelkupplungsprinzips durch die Momentenübergabe auf den Abtrieb 16 bei gleichzeitiger Drehzahlsynchronisierung. Diese Vorgänge werden im Gegensatz zur herkömmlichen Doppelkupplung nicht durch den Einsatz von Reibleistung (Verlustleistung) ausgeführt, sondern mittels der ohnehin aktiv ausregelbaren Elektromotoren 1, 2 realisiert. Ein beispielhafter Schaltvorgang vom ersten Gang zum zweiten Gang ist im Folgenden aufgeführt:
1. K0, B0 geschlossen; erster Gang aktiv
2. Antriebsdrehmoment wird vollständig auf den zweiten Elektromotor 2 verteilt; der erste Elektromotor 1 läuft lastfrei um
3. Schaltelement K0 wird lastfrei geöffnet; Zustand VIER aktiv
4. der erste Elektromotor 1 synchronisiert sich selbst drehzahlgeregelt auf die Zieldrehzahl (Außenradrad 13 Planetengetriebe 4)
5. Kurz vor Erreichen der Synchronität (Δn = ca. 50 1/min) wird Schaltelement K1 geschlossen; Zustand ZWEI aktiv
6. Antriebsdrehmoment kann wieder auf den ersten Elektromotor 1 verteilt werden; zweiter Gang aktiv

Der erste Elektromotor 1 der Ausführungsbeispiele kann beispielsweise eine Asynchronmaschine 1 sein. Der zweite Elektromotor 2 der Ausführungsbeispiele kann entweder eine permanent erregte Synchronmaschine 2 (PMSM) oder ein bürstenloser Gleichstrommotor 2 (BLDC) sein.

## Patentansprüche

1. Antriebssystem für Kraftfahrzeuge mit einem ersten Elektromotor (1) und einem zweiten Elektromotor (2), wobei :
- der Rotor (11) des ersten Elektromotors (1) entweder direkt mit einem Abtrieb (16) verbunden ist oder über wenigstens ein erstes Schaltelement (K1) lösbar mit einem Abtrieb (16) verbindbar ist,
- der Rotor (12) des zweiten Elektromotors (2) direkt oder über eine Schaltvorrichtung lösbar mit wenigstens einem Aggregat (3) und entweder mit dem Zentralrad (15) eines Planetengetriebes (4) oder sowohl mit dem Zentralrad (15) eines Planetengetriebes (4) als auch über ein zweites Schaltelement (K0) lösbar mit dem Rotor (11) des ersten Elektromotors (1) verbunden oder verbindbar ist,
- der Abtrieb (16) mit dem Außenrad (13) des Planetengetriebes (4) verbunden ist,
- sich zwischen dem Außenrad (13) und dem Zentralrad (15) des Planetengetriebes (4) wenigstens ein Planetenrad (19) befindet und
- der Steg (20) des Planetengetriebes (4) als Planetenträger über eine Schalteinrichtung (B0) mit einem feststehenden Teil lösbar verbindbar ist.

2. Antriebssystem nach Patentanspruch 1, **dadurch gekennzeichnet, dass** der erste Elektromotor (1) über ein drittes Schaltelement lösbar mit dem wenigstens einem Aggregat (3) verbindbar ist.

3. Antriebssystem nach Patentanspruch 1, **dadurch gekennzeichnet, dass** der Rotor (11) des ersten Elektromotors (1) über ein weiteres Schaltelement lösbar mit dem Steg (20) verbindbar ist.

4. Antriebssystem nach Patentanspruch 1, **dadurch gekennzeichnet, dass** der Steg (20) des Planetengetriebes (4) über ein weiteres Schaltelement lösbar mit dem Abtrieb (16) verbindbar ist.

5. Antriebssystem nach Patentanspruch 1, **dadurch gekennzeichnet, dass** der Steg (20) über wenigstens eine Schalteinheit mit einem weiteren Motor lösbar verbindbar ist.

6. Antriebssystem nach Patentanspruch 1, **dadurch gekennzeichnet, dass** der Steg (20) über einen Schaltmechanismus mit dem Zentralrad (15) lösbar verbindbar ist.

7. Antriebssystem nach Patentanspruch 1, **dadurch gekennzeichnet, dass** das Zentralrad (15) über ein Schaltsystem mit dem Außenrad (13) lösbar verbindbar ist.

8. Antriebssystem nach Patentanspruch 1, **dadurch gekennzeichnet, dass** das Planetengetriebe (4) ein Zahnradgetriebe ist, wobei das Außenrad (13) eine Innenverzahnung aufweist und das Zentralrad (15) sowie das Planetenrad (19) Stim- oder Kegelräder sind.

9. Antriebssystem nach Patentanspruch 1, **dadurch gekennzeichnet, dass** der erste Elektromotor (1) ein Ringmotor (1) ist, wobei der Außenring (10) der Stator (10) und der Innenring (11) der Rotor (11) ist, und dass sich im Hohlraum des Ringmotors (1) der zweite Elektromotor (2) befindet.

10. Antriebssystem nach Patentanspruch 1, **dadurch gekennzeichnet, dass** der Abtrieb (16) über wenigstens ein Zahnrad- (17) und ein Differentialgetriebe (18) mit den Antriebswellen (8) des Kraftfahrzeugs verbunden ist.

11. Antriebssystem nach Patentanspruch 1, **dadurch gekennzeichnet, dass** das Aggregat (3) ein Kältemittelverdichter (3) einer Klimaanlage für das Kraftfahrzeug und/oder ein Kathodenluftverdichter (3) für einen Brennstoffzellenwandler ist.

12. Antriebssystem nach Patentanspruch 1, **dadurch gekennzeichnet, dass** der erste Elektromotor (1) und der zweite Elektromotor (2) jeweils einen Drehzahlmesser aufweisen und dass die Drehzahlmesser so mit einer Steuereinrichtung für den ersten Elektromotor (1) und den zweiten Elektromotor (2) verbunden sind, dass eine aktive Drehzahlsynchronisierung wenigstens durch eine Drehzahlregelung mindestens eines nicht an den Abtrieb (16) angekoppelten Elektromotors (1, 2) an die Drehzahl eine Getriebewelle erfolgt.

13. Antriebssystem nach Patentanspruch 1, **dadurch gekennzeichnet, dass** der erste Elektromotor (1) und der zweite Elektromotor (2) jeweils einen Drehmomentaufnehmer aufweisen und dass die Drehmomentaufnehmer so mit einer Steuereinrichtung für den ersten Elektromotor (1) und den zweiten Elektromotor (2) verbunden sind, dass über eine Lastpunktverschiebung durch eine Drehmomentvariation in der Ansteuerung der Elektromotoren (1, 2) die Gesamtverlustleistungen im mechanischen und elektrischen Antriebsstrang optimiert werden.

14. Antriebssystem nach Patentanspruch 1, **dadurch gekennzeichnet, dass** der erste Elektromotor (1) und der zweite Elektromotor (2) jeweils einen Drehzahlmesser und einen Drehmomentaufnehmer aufweisen und dass die Drehzahlmesser und die Drehmomentaufnehmer so mit einer Steuereinrichtung für den ersten Elektromotor (1) und den zweiten Elektromotor (2) verbunden sind, dass eine Lastpunktverschiebung an den Elektromotoren (1, 2) bei einem Schaltvorgang erfolgt, damit ein Getriebepfad lastfrei geregelt wird und die Schaltelemente (K0, K1) öffen- oder schließbar sind.

15. Antriebssystem nach Patentanspruch 1, **dadurch gekennzeichnet, dass** das Planetengetriebe (4) ein Zahnradgetriebe ist, wobei das Außenrad (13) eine Innenverzahnung aufweist und das Zentralrad (15) sowie das Planetenrad (19) Stirn- oder Kegelräder sind oder das Außenrad (13) eine Außenverzahnung aufweist und das Zentralrad (15) schaltbar an den ersten Elektromotor (1) und/oder an den zweiten Elektromotor (2) verbindbar ist.

## Claims

1. A drive system for motor vehicles comprising a first electric motor (1) and a second electric motor (2), wherein:
- the rotor (11) of the first electric motor (1) is either directly connected to an output (16) or can be detachably connected to an output (16) by means of at least one first switch element (K1),
- the rotor (12) of the second electric motor (2) is connected directly or can be detachably connected via a switching device to at least one assembly (3) and is or can be detachably connected either to the central gear (15) of a planetary gear system (4) or both to the central gear (15) of a planetary gear system (4) and, via a second switch element (K0), to the rotor (11) of the first electric motor (1),
- the output (16) is connected to the external gear (13) of the planetary gear system (4),
- at least one planet gear (19) is located between the external gear (13) and the central gear (15) of the planetary gear system (4), and
- as the planet carrier, the planet spider (20) of the planetary gear system (4) can be detachably connected via a switching unit (B0) to a fixed part.

2. The drive system according to claim 1, **characterized in that** the first electric motor (1) can be detachably connected via a third switch element to the at least one assembly (3).

3. The drive system according to claim 1, **characterized in that** the rotor (11) of the first electric motor (1) can be detachably connected via another switch element to the planet spider (20).

4. The drive system according to claim 1, **characterized in that** the planet spider (20) of the planetary gear system (4) can be detachably connected via another switch element to the output (16).

5. The drive system according to claim 1, **characterized in that** the planet spider (20) can be detachably connected via another switching unit to another motor.

6. The drive system according to claim 1, **characterized in that** the planet spider (20) can be detachably connected via a switching mechanism to the central gear (15).

7. The drive system according to claim 1, **characterized in that** the central gear (15) can be detachably connected via a switching system to the external gear (13).

8. The drive system according to claim 1, **characterized in that** the planetary gear system (4) is a gear mechanism, wherein the external gear (13) comprises an internal toothing and the central gear (15) and the planet gear (19) are spur gears or bevel gears.

9. The drive system according to claim 1, **characterized in that** the first electric motor (1) is a ring motor (1), wherein the outer ring (10) is the stator (10) and the inner ring (11) is the rotor (11), and **in that** the second electric motor (2) is located in the cavity of the ring motor (1).

10. The drive system according to claim 1, **characterized in that** the output (16) is connected to the drive shafts (8) of the motor vehicle via at least one gear mechanism (17) and one differential gear (18).

11. The drive system according to claim 1, **characterized in that** the assembly (3) is a coolant compressor (3) of an air-conditioning system for the motor vehicle and/or a cathode air compressor (3) for a fuel cell converter.

12. The drive system according to claim 1, **characterized in that** the first electric motor (1) and the second electric motor (2) each comprise a tachometer and that the tachometers are connected to a control unit for the first electric motor (1) and the second electric motor (2) in such a manner that active speed synchronization with the speed of a transmission shaft is performed by controlling the speed of at least one electric motor (1, 2) which is not coupled to the output (16).

13. The drive system according to claim 1, **characterized in that** the first electric motor (1) and the second electric motor (2) each comprise a torque transducer and that the torque transducers are connected to a control unit for the first electric motor (1) and the second electric motor (2) in such a manner that the total power dissipation in the mechanical and electrical drive trains is optimized by means of a load point shift through varying the torque at which the electric motors (1, 2) are operated.

14. The drive system according to claim 1, **characterized in that** the first electric motor (1) and the second electric motor (2) each comprise a tachometer and a torque transducer and that the tachometers and the torque transducers are connected to a control unit for the first electric motor (1) and the second electric motor (2) in such a manner that a load point shift is performed on the electric motors (1, 2) during a gear shift, such that a transmission path can be controlled load-free and the switch elements (K0, K1) can be opened or closed.

15. The drive system according to claim 1, **characterized in that** the planetary gear system (4) is a gear mechanism, wherein the external gear (13) comprises an inner toothing and the central gear (15) as well as the planet gear (19) are spur gears or bevel gears or the external gear (13) comprises an outer toothing and the central gear (15) can be switchably connected to the first electric motor (1) and/or to the second electric motor (2).

## Revendications

1. Système de propulsion pour véhicule automobile avec un premier moteur électrique (1) et avec un deuxième moteur électrique (2), où
- le rotor (11) du premier moteur électrique (1) est directement raccordé à une prise de force (16) ou, via au moins un premier élément de commande (K1), peut être raccordé de façon démontable à une prise de force (16),
- le rotor (12) du deuxième moteur électrique (2) est directement raccordé ou connecté via un dispositif de commande et de façon démontable, à au moins un groupe générateur (3), ou que le rotor est ou peut être raccordé de façon démontable soit à la roue centrale (15) d'un train épicycloïdal (4), soit tant à la roue centrale (15) d'un train épicycloïdal (4) que, via un deuxième élément de commande (K0) et également de façon démontable, au rotor (11) du premier moteur électrique (1),
- la prise de force (16) est raccordée à la roue extérieure (13) du train épicycloïdal (4),
- au moins une roue satellite (19) est disposée entre la roue extérieure (13) et la roue centrale (15) du train épicycloïdal (4), et où
- le support (20) du train épicycloïdal (4) peut être raccordé via un dispositif de commande (B0), de façon démontable et sous forme de porte-satellites, à une pièce fixe.

2. Système de propulsion suivant la revendication 1, **caractérisé en ce que** le premier moteur électrique (1) peut être raccordé, de façon démontable et via un troisième élément de commande, à au moins au groupe générateur (3).

3. Système de propulsion suivant la revendication 1, **caractérisé en ce que** le rotor (11) du premier moteur électrique (1) peut être raccordé, de façon démontable et via un autre élément de commande, au support (20).

4. Système de propulsion suivant la revendication 1, **caractérisé en ce que** le support (20) du train épicycloïdal (4) peut être raccordé, de façon démontable et via un autre élément de commande, à la prise de force (16).

5. Système de propulsion suivant la revendication 1, **caractérisé en ce que** le support (20) peut être raccordé, de façon démontable et via au moins une unité de commande, à un autre moteur.

6. Système de propulsion suivant la revendication 1, **caractérisé en ce que** le support (20) peut être raccordé, de façon démontable et via un mécanisme de commande, à la roue centrale (15).

7. Système de propulsion suivant la revendication 1, **caractérisé en ce que** la roue central (15) peut être raccordée, de façon démontable et via un système de commande, à la roue extérieure (13).

8. Système de propulsion suivant la revendication 1, **caractérisé en ce que** le train épicycloïdal (4) est conçu en tant que boîte de vitesses à engrenages dont la roue extérieure (13) est menue d'une denture intérieure, et que tant la roue centrale (15) que la roue satellite (19) sont conçues comme roue à denture droite ou comme roue conique.

9. Système de propulsion suivant la revendication 1, **caractérisé en ce que** le premier moteur électrique (1) est un moteur annuaire (1) dont 1a couronne extérieure (10), le stator (10) et la couronne intérieure (11) constituent le rotor (11), et qu'un deuxième moteur électrique (2) est disposé dans le vide du moteur annuaire (1).

10. Système de propulsion suivant la revendication 1, **caractérisé en ce que** la prise de force (16) est raccordée, via au moins une boîte de vitesses à engrenages (17) et un différentiel (18), aux arbres d'entraînement (8) du véhicule automobile.

11. Système de propulsion suivant la revendication 1, **caractérisé en ce que** le groupe générateur (3) est un compresseur d'agents frigorigènes (3) d'un climatiseur pour véhicule automobile et/ou un compresseur d'air cathodique (3) d'un convertisseur de piles à combustible.

12. Système de propulsion suivant la revendication 1, **caractérisé en ce que** le premier moteur électrique (1) et le deuxième moteur électrique (2) sont équipés chacun d'un compte-tours, et que ces compte-tours sont connectés à une unité de commande pour le premier moteur électrique (1) et le deuxième moteur électrique (2), ceci de telle sorte qu'au moins un des moteurs électriques (1, 2) non raccordés à la prise de force (16) est activement synchronisé, par au moins un réglage de régime, au nombre de tours d'un arbre de transmission.

13. Système de propulsion suivant la revendication 1, **caractérisé en ce que** le premier moteur électrique (1) et le deuxième moteur électrique (2) sont équipés chacun d'un capteur de couple, et que ces capteurs de couple sont connectés à une unité de commande pour le premier moteur électrique (1) et le deuxième moteur électrique (2), ceci de telle sorte que, grâce à un déplacement de charge obtenu par une variation de couple lors de la commande des moteurs électriques (1, 2), est optimisé l'ensemble des puissances dissipées tant dans la chaîne cinématique mécanique que dans la chaîne cinématique électrique.

14. Système de propulsion suivant la revendication 1, **caractérisé en ce que** le premier moteur électrique (1) et le deuxième moteur électrique (2) sont équipés chacun d'un compte-tours et d'un capteur de couple, et que ces compte-tours et capteurs de couple sont connectés à une unité de commande pour le premier moteur électrique (1) et le deuxième moteur électrique (2), ceci de telle sorte qu'un déplacement de charge se produit sur les moteurs électriques (1, 2) lors d'un changement de rapport, ce qui fait qu'une chaîne cinématique soit réglée sans charge et que les éléments de commande (K0, K1) puissent être ouverts ou fermés.

15. Système de propulsion suivant la revendication 1, **caractérisé en ce que** le train épicycloïdal (4) est une boîte de vitesses à engrenages dont la roue extérieure (13) est menue d'une denture intérieure, que tant la roue centrale (15) que la roue satellite (19) sont conçues comme roue à denture droite ou comme roue conique, ou que la roue extérieure (13) est dotée d'une denture extérieure et que la roue centrale (15) peut être raccordée de façon réglable au premier moteur électrique (1) et/ou au deuxième moteur électrique (2).
